(19) Europäisches Patentamt
European Patent Office
Office européen des brevets

(11) **EP 2 924 141 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(21) Anmeldenummer: **14161607.8**

(22) Anmeldetag: **25.03.2014**

(51) Int Cl.:
*C22C 38/02* (2006.01)  *C22C 38/04* (2006.01)
*C22C 38/18* (2006.01)  *C21D 8/02* (2006.01)
*B32B 15/01* (2006.01)  *C21D 9/46* (2006.01)
*C22C 38/06* (2006.01)  *C22C 38/42* (2006.01)
*C22C 38/44* (2006.01)  *C22C 38/46* (2006.01)
*C22C 38/48* (2006.01)  *C22C 38/00* (2006.01)
*C22C 38/50* (2006.01)  *C22C 38/54* (2006.01)
*C22C 38/58* (2006.01)  *C23C 2/02* (2006.01)
*C23C 2/06* (2006.01)  *C23C 2/28* (2006.01)

(54) **Kaltgewalztes Stahlflachprodukt und Verfahren zu seiner Herstellung**

Cold rolled steel flat product and method for its production

Produit plat en acier laminé à froid et son procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.09.2015 Patentblatt 2015/40**

(73) Patentinhaber:
• **ThyssenKrupp Steel Europe AG**
**47166 Duisburg (DE)**
• **thyssenkrupp AG**
**45143 Essen (DE)**

(72) Erfinder:
• **Voß, Sigrun**
**46049 Oberhausen (DE)**
• **Bongards, Andreas**
**47198 Duisburg (DE)**
• **Sebald, Roland**
**47608 Geldern (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
JP-A- 2002 317 245     US-A1- 2003 106 620
US-A1- 2010 043 513

**EP 2 924 141 B1**

**Beschreibung**

Die Erfindung betrifft ein kaltgewalztes Stahlflachprodukt mit einer mindestens 320 MPa betragenden Dehngrenze und ein Verfahren zu seiner Herstellung.

Bei Stahlflachprodukten der hier in Rede stehenden Art handelt es sich typischerweise um Walzprodukte, wie Stahlbänder oder Bleche sowie daraus hergestellte Zuschnitte und Platinen.

Alle Angaben zu Gehalten der in der vorliegenden Anmeldung angegebenen Stahlzusammensetzungen sind auf das Gewicht bezogen, sofern nicht ausdrücklich anders erwähnt. Alle nicht näher bestimmten, im Zusammenhang mit einer Stahllegierung stehenden "%-Angaben" sind daher als Angaben in "Gew.-%" zu verstehen.

Angaben zu Gefügebestandteilen beziehen sich jeweils auf Flächenprozente ("Flächen-%), soweit nicht ausdrücklich anders angegeben.

Hochfeste Stahlflachprodukte haben insbesondere im Bereich des Automobilbaus eine wachsende Bedeutung, da sie besonders leichte Karosserie- und Fahrwerkskonstruktionen ermöglichen. Abhängig von ihrer Anfälligkeit gegen Korrosion, ihrem Einsatzort und der Aggressivität der Umgebung, in der sie eingesetzt werden, werden die Stahlflachprodukte dabei mit einem metallischen Schutzüberzug eingesetzt. Das geringe Gewicht von hochfesten Stahlflachprodukten trägt nicht nur zur optimalen Nutzung der technischen Leistungsfähigkeit des jeweiligen Antriebsaggregats bei, sondern unterstützt die Ressourceneffizienz, Kostenoptimierung und den Klimaschutz.

Hohe Festigkeiten können bei Stahlflachprodukten durch Zugabe von größeren Mengen an festigkeitssteigernden Legierungsbestandteilen und geeignete Herstellverfahren erzielt werden. Die mit hohen Legierungsgehalten und aufwändigen Herstellverfahren verbundenen Kosten stehen jedoch der Forderung nach möglichst preisgünstigen Produkten entgegen, die auf wirtschaftliche Weise betriebssicher hergestellt werden können. Die Fachwelt ist daher bestrebt, über die Einsparung teurer Legierungselemente, wie zum Beispiel Mikrolegierungselemente und Molybdän, die Herstellkosten für hochfeste Stahlflachprodukte zu senken.

Kostengünstiger erhältliche Legierungselemente, die zum Ausgleich der für eine Minimierung der teuren festigkeitssteigernden Legierungselemente hochfesten Stählen zugegeben werden können, führen häufig in Folge einer Tendenz zur Korngrenzenoxidation und zur Bildung von Oxiden an der Oberfläche des Stahlblechs zur Verschlechterung der Verarbeitungseigenschaften und Oberflächenbeschaffenheit. Daher können mit den bekannten kostengünstigen Legierungskonzepten in vielen Fällen zwar die hohen geforderten Festigkeiten erreicht, jedoch nicht die anderen Eigenschaften gewährleistet werden, wie eine gute Zähigkeit, ein gutes Sprödbruchwiderstandsverhalten, eine optimale Eignung zum Kaltumformen und zum Schweißen, die von für den Automobilbau vorgesehenen Stahlflachprodukten erwartet werden.

Korngrenzenoxidation entsteht bei Temperaturen oberhalb von 500 °C dadurch, dass Sauerstoff durch Diffusionsprozesse entlang der Korngrenzen von der Oberfläche aus in das Stahlsubstrat eindringt. Hierbei bildet der Sauerstoff mit den Elementen Oxide, die eine höhere Sauerstoffaffinität haben als Eisen, wie zum Beispiel Silizium, Aluminium, Mangan und Chrom. Dies führt zu einer deutlichen Schwächung der Korngrenzen und im fortgeschrittenen Stadium zum Herauslösen ganzer Körner aus dem Verbund. Diese wirken insbesondere beim Umformen als Kerben und führen so zu einem vorzeitigen Materialversagen. Ähnliches gilt für beschichtetes Material. Die Kerbwirkung der Korngrenzenoxidation besteht auch bei beschichtetem Material. Zusätzlich gilt, dass mit dem Herauslösen einzelner Körner oder ganzer Kornlagen die Beschichtungshaftung stark reduziert ist und es zu Defekten in der Oberflächenbeschichtung bis zum vollständigen Ablösen der Oberflächenbeschichtung kommt.

Ein Beispiel für ein Stahlflachprodukt, das für Automobilanwendungen bestimmt ist und Bake-Hardening-Eigenschaften besitzen soll, ist in der EP 2 392 683 B1 beschrieben. Das aus dieser Veröffentlichung bekannte Stahlflachprodukt besteht aus einem Stahl, der neben Eisen und unvermeidbaren Verunreinigungen (in Masse-%) mehr als 0,015 % und weniger als 0,100 % C, 0,01 - 0,3 % Si, mehr als 1,0 % und weniger als 1,90 % Mn, 0,015 % - 0,05 % P, bis zu 0,03 % S, 0,01 - 0,5 % ungelöstes Al, bis zu 0,005 % N, weniger als 0,30 % Cr, 0,0003 - 0,005 % B, weniger als 0,014 % Ti, bis zu 0,1 % Mo, bis zu 0,4 % V, bis zu 0,015 % Nb, bis zu 0,15 % W, bis zu 0,1 % Zr, bis zu 0,5 % Cu, bis zu 0,5 % Ni, bis zu 0,2 % Sn, bis zu 0,2 % Sb, bis zu 0,01 % Ca, bis zu 0,01 % Ce und bis zu 0,01 % La enthält. Gleichzeitig soll die Legierung des Stahls die Bedingungen $2,2 \leq (\%Mn+ 1,3\% \times \%Cr + 8 \%P + 150 B^* \leq 3,1$ und $0,42 \leq 8 \times \%P + 150 B^*) \leq 0,73$ erfüllen. $B^*$ wird dabei nach der Formel $B^* = \%B + \%Ti \times 0,2025 + \%Al \times 0,01$ berechnet und gleich 0,0022 % gesetzt, wenn sich für $B^*$ nach dieser Formel ein Wert für $B^*$ ergibt, der größer als 0,0022 % ist. Mit %Mn, %Cr, %P, %B, %Ti und %Al sind in den genannten Formeln der jeweilige Mn-, Cr-, P-, B-, Ti- und Al-Gehalt der Legierung bezeichnet.

Das Gefüge des in der voranstehend dargelegten Weise legierten bekannten Stahlflachprodukts soll zudem ein Mikrogefüge aus Ferrit und einer aus Martensit, Restaustenit sowie optional Perlit oder Bainit bestehenden zweiten Phase haben. Der Flächenanteil der zweiten Phase soll in Summe 3 - 15 Flächen-% und der Anteil des Flächenanteils von Martensit und Restaustenit an dem Gesamtflächenanteil der zweiten Phase mehr als 70 % betragen. Des Weiteren sollen 50 % oder mehr des Flächenanteils der zweiten Phase an einem Korngrenzentripelpunkt vorhanden sein, wobei Körner, die drei oder mehr Ferritkorngrenzen berühren, als Körner zweiter Phase definiert sind, die an dem Korngrenzentripelpunkt vorhanden sind.

Aus den in der EP 2 392 683 B1 aufgeführten Ausführungsbeispielen geht hervor, dass die derart beschaffenen bekannten Stahlflachprodukte Zugfestigkeiten von 430 - 594 MPa und Dehngrenzen von 201 - 274 MPa aufweisen. Zur Herstellung solcher Stahlflachprodukte wird in der EP 2 392 683 B1 ein Verfahren vorgeschlagen, bei dem eine auf 1100 - 1300 °C erwärmte Stahlbramme bei einer Fertigwalztemperatur, die zwischen dem Ar3-Übergangspunkt und dem Ar3-Übergangspunkt + 150 °C liegt, warmgewalzt, nach dem Warmwalzen mit einer Kühlrate von mindestens 20 K/s auf 640 °C abgekühlt und anschließend bei 400 - 620 °C gehaspelt wird. Dann wird das Warmband mit einem Verformungsgrad von 50 - 85 % kaltgewalzt. Das erhaltene kaltgewalzte Band wird bei einer Anlasstemperatur von mehr als 740 °C und weniger als 840 °C in einer kontinuierlichen Verzinkungs- und Galvannealing-Linie einer Anlassbehandlung unterzogen, dann mit einer durchschnittlichen Kühlrate von 2 - 30 K/s von der Anlasstemperatur auf die Temperatur eines Verzinkungsbades gekühlt, das bei 450 - 500 °C gehalten wird. Das so anlassbehandelte Band durchläuft das Verzinkungsbad. Das aus dem Verzinkungsbad austretende Stahlflachprodukt wird dann gemäß einer ersten Variante des bekannten Verfahrens direkt mit einer durchschnittlichen Kühlrate von 5 - 100 K/s auf eine Temperatur von ≤ 100 °C abgekühlt oder gemäß einer zweiten Variante des bekannten Verfahrens einer Legierungsbehandlung unterzogen, bei der es für 30 Sekunden in einem Temperaturbereich von 470 - 650 °C gehalten wird, um dann wiederum mit einer durchschnittlichen Kühlrate von 5 - 100 K/s auf ≤ 100 °C abgekühlt zu werden.

Neben dem voranstehend erläuterten Stand der Technik ist aus der US 2003/106620 A1 ein Stahl bekannt, der (in Masse-%) 0,08 % C, 0,25 % Si, 2,0 % Mn, 0,032 % P, 0,002 % S, 0,018 % Al, 0,0048 % N, 0,045 % Nb, 0,15 % Cr und 0,15 % Mo sowie als Rest Fe und unvermeidbare Verunreinigungen enthält. Dabei ist Nb in dem bekannten Stahl vorhanden, um beim Verschweißen des bekannten Blechs ein Anlassen in der Wärmeeinflusszone der Schweißnaht zu verhindern und um die Verformbarkeit durch Verfeinerung der Ferritkörner zu verbessern.

Aus der US 2010/043513 A1 ist des Weiteren ein Stahl mit (in Gew.-%) 0,098 % C, 1,81 % Mn, 0,005 % P, 0,003 % S, 0,19 % Si, 0, 060 Al, 0,0048 % N, 0,37 % Cr, 0,045 % Ti und 0,0044 % B, Rest Fe und unvermeidbare Verunreinigungen bekannt. Zur Herstellung eines Stahlblechs ist aus diesem Stahl in einer Zwei-Walzen-Gießvorrichtung ein gegossenes Band erzeugt worden, dessen Dicke 1,6 mm betrug. Anschließend ist das gegossene Band inline zu einem Band mit einer Dicke von 1,25 mm warmgewalzt worden, wobei die bei den verschiedenen Versuche eingestellten Warmwalzendtemperaturen 950 - 1050 °C betrugen. Die so erhaltenen Warmbänder sind bei Temperaturen von 480 - 540°C gehaspelt worden. Nach dem Haspeln wiesen die Warmbänder Zugfestigkeiten von 878 - 1263 MPa und Dehnungen A80 von 11,3 - 5,5 % auf.

Vor dem Hintergrund des voranstehend erläuterten Standes der Technik bestand die Aufgabe der Erfindung darin, ein Stahlflachprodukt zu schaffen, das bei einem auf kostengünstig erhältlichen Legierungselementen basierenden Legierungskonzept eine für die Verwendung im Automobilbau optimale Eigenschaftskombination besitzt.

Ebenso sollte ein Verfahren zur Herstellung eines solchen Stahlflachprodukts angegeben werden.

In Bezug auf das Produkt löst die Erfindung diese Aufgabe durch ein kaltgewalztes Stahlflachprodukt, das die in Anspruch 1 angegebenen Merkmale besitzt.

In Bezug auf das Verfahren besteht die Lösung der voranstehend genannten Aufgabe darin, dass bei der Erzeugung eines erfindungsgemäßen Stahlflachprodukts die in Anspruch 5 angegebenen Arbeitsschritte durchlaufen werden.

Der Erfindung liegt eine Stahllegierung zu Grunde, deren Legierungsbestandteile und Legierungsgehalte in engen Grenzen so aufeinander abgestimmt sind, dass bei Verwendung von kostengünstigen Legierungselementen und einer betriebssicher durchzuführenden Herstellung jeweils maximierte mechanische Eigenschaften und eine optimierte Oberflächenbeschaffenheit erzielt werden.

Legierungsbestandteile und Legierungsgehalte der erfindungsgemäßen Stahllegierung sind dabei so gewählt, dass sich bei Einhaltung der erfindungsgemäß vorgegebenen Arbeitsschritte zuverlässig ein hochfestes Stahlflachprodukt mit einer Eigenschaftskombination erzeugen lässt, das für die Verwendung im Leichtbau, insbesondere im Automobilbau, besonders geeignet ist.

Kohlenstoff ist im erfindungsgemäßen Stahlflachprodukt mit Gehalten von 0,06 Gew.-% bis 0,1 Gew.-% enthalten. Ein Gehalt von mindestens 0,06 Gew.-% ist erforderlich, um die gewünschte Festigkeit über die Bildung einer ausreichenden Menge an Martensit sicher zu erreichen. Gehalte von mehr als 0,1 Gew.-% würden sich dagegen negativ auf die Schweißeignung auswirken.

Silizium ist im erfindungsgemäßen Stahl mit Gehalten von 0,15 - 0,4 Gew.-% vorhanden. Ein Si-Gehalt von 0,15 Gew.-% trägt zur Härtung des Ferrits bei. Ein Si-Gehalt von mehr als 0,4 Gew.-% bringt jedoch die Gefahr mit sich, dass sich bei einer im Zuge der Erzeugung des Stahlflachprodukts durchgeführten Glühbehandlung Siliziumoxid an der Oberfläche des Stahlbandes bildet, welches die weitere Verarbeitung und eine optional erfolgende Beschichtung des Stahlflachprodukts erschweren würde.

Mangan gewährleistet mit einem Mindestgehalt von 1,5 Gew.-%, dass das erfindungsgemäße Stahlflachprodukt die geforderte Festigkeit besitzt. Mn-Gehalte von mehr als 2 Gew.-% führen jedoch zu einem erhöhten Aufwand bei der Erzeugung. Zudem neigt Mangan oberhalb von 2 Gew.-% zur Ausbildung von unerwünschten Seigerungen.

Aluminium wird während der Stahlerzeugung zum Desoxidieren und zur Abbindung des Stickstoffs verwendet. Hierfür ist ein Gehalt von bis zu 0,1 Gew.-% erforderlich. Betriebssicher tritt die gewünschte Wirkung bei einem Aluminiumgehalt von 0,02 - 0,05 Gew.-% ein.

Chrom wirkt im erfindungsgemäßen Stahlflachprodukt ebenfalls festigkeitssteigernd. Hierzu wird ein Gehalt von mindestens 0,2 Gew.-% benötigt. Zu hohe Cr-Gehalte führen allerdings zu einer Verminderung der Dehnungseigenschaften. Daher ist der Chromgehalt auf höchstens 0,5 Gew.-% beschränkt.

Die kombinierte festigkeitssteigernde Wirkung der Anwesenheit von Kohlenstoff, Silizium, Mangan und Chrom wird erfindungsgemäß dadurch sichergestellt, dass die Summe der innerhalb der voranstehenden Vorgaben eingestellten Gehalte %C, %Si, %Mn, %Cr an diesen Elementen mindestens 2,3 Gew.-% beträgt (%C + %Si + %Mn + %Cr $\geq$ 2,3 Gew.-%). Auf diese Weise werden die geforderten Festigkeiten sicher erreicht, ohne dass dafür dem Stahl des erfindungsgemäßen Stahlflachprodukts Mikrolegierungselemente oder andere festigkeitssteigernde Elemente zugegeben werden müssen. Übersteigt die Summe der Gehalte an C, Si, Mn und Cr dagegen 2,8 Gew.-%, so steigt zwar die Festigkeit des Stahlflachprodukts weiter an. Dies würde jedoch mit einer unerwünschten Abnahme der Bruchdehnung einhergehen. Auch würde in diesem Fall die Oberflächenbeschaffenheit eines erfindungsgemäßen Stahlflachprodukts verschlechtert, da eine zu große Gesamtmenge an C, Si, Mn und Cr die Korngrenzenoxidation bei hohen Haspeltemperaturen oder Glühtemperaturen deutlich fördern würde. Dies gilt insbesondere für Silizium und zusätzlich auch für Aluminium. Aus diesem Grund soll die aus dem Al-Gehalt %Al und Si-Gehalt %Si gebildete Summe im erfindungsgemäßen Stahlflachprodukt höchstens gleich 0,4 Gew.-% sein.

Durch die erfindungsgemäße Einstellung der Legierungsgehalte eines erfindungsgemäßen Stahlflachprodukts sind die Voraussetzungen dafür geschaffen, dass die Korngrenzenoxidation auf eine ausgehend von der Oberfläche des Stahlsubstrats gemessene Tiefe von 5 $\mu$m beschränkt ist. Würde sich die Korngrenzenoxidation über eine größere Tiefe erstrecken, würde dies zu einer deutlichen Verschlechterung der Oberflächenbeschaffenheit führen. Diese würde sich in einer schlechten Haftung einer beispielsweise als Korrosionsschutz aufgetragenen Beschichtung äußern. So kann es in Folge einer Korngrenzenoxidation, die tiefer in das Stahlsubstrat eindringt als 5 $\mu$m, zur Auslösung von oberen Kornlagen sowie zu Problemen bei der Weiterverarbeitung des Stahlblechs kommen. Insbesondere beim Umformen kann dann eine erhöhte Kerbwirkung auftreten, welche zum Bauteilversagen führen kann. Indem erfindungsgemäß die Summe der Gehalte an Kohlenstoff, Silizium, Mangan und Chrom auf maximal 2,8 Gew.-% (2,3 Gew.-% $\leq$ %C + %Si + %Mn + %Cr $\leq$ 2,8 Gew.-%) und die Summe der Gehalte an Silizium %Si und Aluminium %Al auf maximal 0,4 Gew.-% (%Al + %Si $\leq$ 0,4 Gew.-%) beschränkt ist, sind diese Gefahren vermieden.

Weitere Legierungselemente sind im Stahl nicht vorgesehen. Insbesondere B, V, Nb, Ti, Mo, Ni, Cu sind im erfindungsgemäßen Stahlblech allenfalls in einem so geringen Maße vorhanden, dass sie keinen Einfluss auf die Eigenschaften des Stahlflachprodukts haben und als solches den technisch unvermeidbaren Verunreinigungen zuzurechnen sind. Durch die Zugabe eines dieser Elemente in wirksamen Mengen würde zwar die Festigkeit des erfindungsgemäßen Stahlflachprodukts erhöht. Im Gegenzug müsste jedoch ein Rückgang der Bruchdehnung und des n-Werts des Stahlflachprodukts hingenommen werden. Daher gilt für Molybdän, Kupfer und Nickel eine Gehaltsobergrenze von 0,1 Gew.-%, für Niob und Titan eine Gehaltsobergrenze von jeweils 0,01 Gew.-%, für Vanadium eine Gehaltsobergrenze von 0,02 Gew.-% sowie für Bor eine Gehaltsobergrenze von 0,0006 %. Auch P, S und N zählen zu den unvermeidbaren Verunreinigungen des Stahlsubstrats eines erfindungsgemäßen Stahlflachprodukts.

Das Begleitelement Phosphor würde in größeren Gehalten die Umformbarkeit sowie das Fügeverhalten insbesondere beim Schweißen des erfindungsgemäßen Stahlflachprodukts verschlechtern. Der Phosphorgehalt soll daher die Obergrenze von 0,03 Gew.-% nicht überschreiten. Optimaler Weise ist der P-Gehalt auf weniger als 0,02 Gew.-% beschränkt.

Schwefel in größeren Gehalten hätte ebenfalls einen entschieden negativen Einfluss auf die Umformbarkeit eines erfindungsgemäß verarbeiteten Stahls infolge von MnS-Bildung. Aus diesem Grund darf der S-Gehalt eines erfindungsgemäßen Stahlflachprodukts höchstens 0,006 Gew.-% betragen. Um die negativen Einflüsse von Schwefel auf die Eigenschaften des erfindungsgemäß verarbeiteten Stahls sicher auszuschließen, kann der S-Gehalt auf max. 0,003 Gew.-% beschränkt sein.

Stickstoff ist in Stahlflachprodukten der erfindungsgemäßen Art technisch unvermeidbar als Begleitelement in geringen, in den Bereich der Verunreinigungen fallenden Gehalten vorhanden. Zu hohe Stickstoffgehalte verschlechtern jedoch die Alterungsbeständigkeit entscheidend. Um dies zu verhindern, ist bei einem erfindungsgemäß verarbeiteten Stahl die Obergrenze für den Stickstoff-Gehalt auf 0,008 Gew.-% festgesetzt.

Die Dehngrenze Rp0,2 eines erfindungsgemäßen Stahlflachprodukts beträgt mindestens 320 MPa. In der Betriebserprobung haben erfindungsgemäße Stahlflachprodukte regelmäßig Dehngrenzen Rp0,2 von 320 - 450 MPa erreicht.

Die Zugfestigkeit Rm erfindungsgemäßer Stahlflachprodukte beträgt dabei mindestens 580 MPa, wobei hier die Zugfestigkeiten Rm von erfindungsgemäßen Stahlflachprodukten in der Praxis regelmäßig im Bereich von 580 - 720 MPa liegen.

Gleichzeitig weisen erfindungsgemäße Stahlflachprodukte eine Bruchdehnung A80 von jeweils mindestens 20 % auf, wobei die Bruchdehnung A80 erfindungsgemäßer Stahlflachprodukte regelmäßig im Bereich von 20 - 36 % liegt.

Die für erfindungsgemäße Stahlflachprodukte ermittelten n-Werte betragen mindestens 0,13. In der Praxis liegen die n-Werte bei 0,13 - 0,2. Die n-Werte wurden gemäß DIN ISO 10275:2009-06 in Verbindung mit DIN EN ISO 6892-1:2009 als $n_{10-20/Ag}$-Werte bestimmt.

Indem die Korngrenzenoxidation, wie voranstehend erläutert, bei erfindungsgemäßen Stahlflachprodukten ausgehend von der Oberfläche des fertigen Stahlflachprodukts auf eine Tiefe von maximal 5 $\mu$m beschränkt ist, weist ein erfindungsgemäßes Stahlflachprodukt eine gute Eignung für die Weiterverarbeitung durch Umformen oder Fügen auf.

Aufgrund ihrer optimalen Oberflächenbeschaffenheit eignen sich erfindungsgemäße Stahlflachprodukte in besonderer Weise dazu, in an sich bekannter Weise zur Verbesserung ihrer Korrosionsbeständigkeit mit einer Beschichtung überzogen zu werden. Hierbei handelt es sich insbesondere um metallische Überzüge, wie Zn-, Mg- oder Al-basierte Beschichtungen.

Das Gefüge eines erfindungsgemäßen Stahlflachprodukts enthält 62 - 82 Flächen-% Ferrit, 10 - 30 Flächen-% Martensit, 1,5 - 8 Flächen-% Restaustenit und in Summe maximal 10 Flächen-% sonstige Gefügebestandteile, zu denen zum Beispiel Perlit, Bainit und Zementit, aber auch Karbide gezählt werden.

Der neben dem das Gefüge domminierenden Ferrit vorhandene Martensitanteil von 10 - 30 Flächen-% stellt einerseits sicher, dass bei erfindungsgemäßen Stahlflachprodukten die geforderten Festigkeitswerte erreicht werden. Gleichzeitig ist er so beschränkt, dass es zu keinem übermäßigen Anstieg der Festigkeit zu Lasten der Bruchdehnung kommt.

Zur hohen Mindestbruchdehnung A80 von ≥ 20 % tragen zudem die 1,5 - 8 Flächen-% an Restaustenit im Gefüge des erfindungsgemäßen Stahlflachprodukts bei. Ein Anteil von über 8 Flächen-% Restaustenit würde auf Kosten des Anteils an Martensit erhalten bleiben, wodurch wieder die Gefahr bestünde, dass die geforderte Festigkeit des erfindungsgemäßen Stahlflachprodukts nicht erreicht wird.

Die Summe der neben dem dominierenden Ferrit sowie Martensit und Restaustenit vorhandenen sonstigen Gefügebestandteile ist so gering, dass sie zu keiner wesentlichen Beeinflussung der mechanischen Eigenschaften des Stahls, insbesondere seiner Dehngrenze Rp0,2, führt.

Die Summe der neben Ferrit im Gefüge des erfindungsgemäßen Stahlflachprodukts existierenden weiteren Phasen und Gefügebestandteile, also die Summe aus Martensit, Restaustenit und sonstiger Gefügebestandteile, beträgt mindestens 18 Flächen-%. Auf diese Weise ist betriebssicher gewährleistet, dass erfindungsgemäß legierte Stahlflachprodukte die geforderten Festigkeiten erreichen.

Um sicherzustellen, dass die gewünschte hohe Bruchdehnung erreicht wird, kann gleichzeitig der Gesamtanteil der neben Ferrit existierenden weiteren Phasen auf höchstens 38 Flächen-% beschränkt werden. Auch hier gilt, dass bei einem Gesamtanteil der weiteren Phasen von mehr als 38 Flächen-% die Zugfestigkeit erfindungsgemäßer Stahlflachprodukte zwar deutlich ansteigen würde, dass damit einhergehend jedoch die Mindestbruchdehnung ebenso deutlich abnehmen würde.

Die hier im Allgemeinen und in Bezug auf die nachfolgend dargestellten Ausführungsbeispiele angegebenen mechanischen Eigenschaften erfindungsgemäßer Stahlflachprodukte sind jeweils an Längsproben gemäß DIN EN ISO 6892-1:2009, Probenform 2 nach DIN EN ISO 6892-1:2009, Messlänge 80 mm, Probenbreite 20 mm ermittelt worden. Die Längsproben stammten dabei aus der Bandachse, d. h. aus einer Lage in der Mitte der Bandbreite. Die Bestimmung der n-Werte erfolgte auch hier gemäß DIN ISO 10275:2009-06 in Verbindung mit DIN EN ISO 6892-1:2009 als $n_{10-20/Ag}$-Werte.

Zur Bestimmung der von der Oberfläche des Stahlsubstrats aus gemessenen Tiefe der Korngrenzenoxidation wird vom fertig hergestellten erfindungsgemäßen Stahlflachprodukt aus der Bandachse ein 30 mm langer Schliff längs zur Walzrichtung durch die Banddicke angefertigt. Hierfür werden die Proben beispielsweise in Kunstharz eingebettet, im Längsschliff geschliffen und mit einer Diamantsuspension poliert, deren Körner einen mittleren Korndurchmesser von 1 $\mu$m haben. Anschließend wird der Schliff mit Wasser oder Alkohol gereinigt, um eine flecken- und streifenfreie Oberfläche zu erhalten.

Die Korngrenzenoxidation wird im Schliffbild durch eine dunkle Belegung entlang der Korngrenze sichtbar. Die Tiefe der Korngrenzenoxidation wird bei einer Vergrößerung von 1000:1 unter einem Lichtmikroskop über eine Messlänge von mindestens 100 $\mu$m in Walzrichtung gemessen. Für die Bewertung der Korngrenzenoxidation wird der größte Wert der Eindringtiefe herangezogen, d. h. der Wert, der an der Stelle ermittelt wird, an der die Korngrenzenoxidation am weitesten in das Stahlsubstrat eingedrungen ist und zwar bezogen auf die Oberfläche an der betreffenden Stelle. Die hier gemachten und erfindungsgemäß einzuhaltenden Maßgaben zur Tiefe der Korngrenzenoxidation bedeuten daher, dass der betreffende Tiefenwert ein Maximum darstellt, das beim jeweiligen erfindungsgemäßen Stahlflachprodukt nicht überschritten wird. Dies ist nicht gleichzusetzen damit, dass die Korngrenzenoxidation über eine bestimmte größere Fläche gleichmäßig diesen Wert hat. Vielmehr verteilt sich die Eindringtiefe bezogen auf eine größere Fläche jeweils über einen Bereich von 0 $\mu$m (keine Korngrenzenoxidation feststellbar) bis zum jeweiligen Maximalwert, der erfindungsgemäß nicht über 5 $\mu$m hinausgeht.

Für die Bestimmung der Gefügebestandteile kann der für die Untersuchung der Korngrenzenoxidation ange-

fertige Längsschliff zusätzlich in an sich bekannter Weise so aufbereitet werden, dass die betreffenden Bestandteile sichtbar werden. Hierzu kann der Längsschliff mit einem geeigneten Mittel geätzt werden, z. B. mit einer alkoholischen Salpetersäure, die einen Salpetersäureanteil von 3 Vol.-% enthält, in der Fachsprache auch als "Nital" bezeichnet. Betrachtet wird hierbei die Probenlage in 1/3 bzw. 2/3 der Dicke des Stahlblechs bei 1000-facher Vergrößerung im Auflichtmikroskop.

Die Bestimmung des Restaustenitanteils erfolgt mittels Mikrodiffraktometer am selben Längsschliff. Während der Messung beträgt die Beschleunigungsspannung 35 kV und die Stromstärke 30 mA. Die untere Nachweisgrenze liegt hier bei 1 % Restaustenit.

Das erfindungsgemäße Verfahren zum Herstellen eines erfindungsgemäßen Stahlflachprodukts umfasst folgende Arbeitsschritte:

a) Erschmelzen einer Stahlschmelze, die (in Gew.-%) aus 0, 06 - 0,1 % C, 0, 15 - 0,4 % Si, 1,5 - 2 % Mn, 0,2 - 0,5 % Cr, bis zu 0,1 % Al, wobei die Summe der Gehalte an C, Si, Mn und Cr mindestens gleich 2,3 % und höchstens gleich 2,8 % und die Summe der Gehalte an Si und Al höchstens gleich 0,4 %, bis zu 0,03 % P, bis zu 0,006 % S, bis zu 0,008 % N sowie weiteren technisch unvermeidbaren Verunreinigungen, zu denen ≤ 0,0006 % B, ≤ 0,02 % V, sowie jeweils ≤ 0,01 % Nb, Ti sowie jeweils ≤ 0,1 % Mo, Ni und Cu gehören, und als Rest aus Eisen besteht;

b) Vergießen der Stahlschmelze zu einem Vorprodukt, bei dem es sich um eine Bramme oder Dünnbramme handelt;

c) Durcherwärmen des Vorprodukts auf eine Temperatur von 1100 - 1300 °C;

d) optionales Entzundern und Vorwalzen des durcherwärmten Vorprodukts;

e) Fertigwarmwalzen des Vorprodukts zu einem warmgewalzten Stahlflachprodukt, wobei die Temperatur (AT) des Vorprodukts am Anfang des Fertigwarmwalzens 1050 - 1150 °C und die Temperatur (ET) des fertig warmgewalzten Stahlflachprodukts am Ende des Fertigwarmwalzens 800 - 950 °C beträgt;

f) Abkühlen des fertig warmgewalzten und optional zuvor über die Pausenzeit gehaltenen Stahlflachprodukts auf eine Haspeltemperatur (HT) von 500 - 650 °C;

g) Haspeln des auf die Haspeltemperatur (HT) abgekühlten warmgewalzten Stahlflachprodukts;

h) Abkühlen des warmgewalzten Stahlflachprodukts im Coil auf Raumtemperatur;

i) Entzundern des abgekühlten warmgewalzten Stahlflachprodukts;

j) Kaltwalzen des warmgewalzten Stahlflachprodukts zu einem kaltgewalzten Stahlflachprodukt, wobei der über das Kaltwalzen erzielte Kaltwalzgrad 40 - 85 % und die Dicke des fertig kaltgewalzten Stahlflachprodukts 0,6 - 2,9 mm beträgt;

k) im kontinuierlichen Durchlauf erfolgendes Glühen des kaltgewalzten Stahlflachprodukts, wobei das Stahlflachprodukt zunächst in einem oder mehreren Schritten auf eine Glühtemperatur (GT) von 760 - 860 °C gebracht und dann in diesem Glühtemperaturbereich über eine Glühdauer (Gt) gehalten wird, die in einem Glühdauerbereich liegt, dessen Untergrenze Gtu und Obergrenze Gto in Abhängigkeit von der jeweiligen Dicke D des kaltgewalzten Stahlflachprodukts wie folgt ermittelt wird:

$$\text{Gtu } [s] = 3,56 * D^2 [s/mm^2] - 5,1 * D [s/mm] + 9,8 \ s$$

$$\text{Gto } [s] = -21,4 * D^2 [s/mm^2] + 132,8 * D [s/mm] + 47 \ s$$

l) Abkühlen des geglühten Stahlflachprodukts in einem oder mehreren Schritten auf eine Zwischentemperatur ZT von 400 - 550 °C, wobei die Abkühlung mindestens im Temperaturbereich von 550 - 650 °C mit einer Abkühlrate von 2 - 100 K/s erfolgt;

m') Schmelztauchbeschichten des auf die Zwischentemperatur ZT abgekühlten Stahlflachprodukts

oder

m") direktes Abkühlen des Stahlflachprodukts von der Zwischentemperatur mit einer Abkühlgeschwindigkeit RK von 0,1 - 50 K/s auf Raumtemperatur.

Demnach wird im Arbeitsschritt a) eine entsprechend der erfindungsgemäß für das Stahlflachprodukt vorgegebenen Legierung zusammengesetzter Stahl erschmolzen, der zu einem Vorprodukt vergossen wird. Dies kann im konventionellen Brammenguss oder im Dünnbrammenguss erfolgen.

Anschließend wird das jeweilige Vorprodukt im Arbeitsschritt b) auf eine Temperatur von 1100 - 1300 °C durcherwärmt. Im Fall, dass die Schmelze zu Brammen vergossen worden ist, werden dazu die erhaltenen Brammen auf 1100 - 1300 °C wiedererwärmt, wogegen die durch Dünnbrammengießen erhaltenen Dünnbrammen optimaler Weise aus der Gießhitze in diesem Temperaturbereich gehalten werden. Erforderlichenfalls kann selbstverständlich auch hier eine Wiedererwärmung erfolgen.

Die bei 1100 - 1300 °C durcherwärmten Vorprodukte werden, sofern dies im Hinblick auf die Dicke des zu erzeugenden fertig warmgewalzten Stahlflachprodukts erforderlich ist, im Arbeitsschritt d) optional in üblicher Weise entzundert und vorgewalzt. Ein Entzundern und Vorwalzen ist üblicherweise erforderlich, wenn Brammen größerer Dicke verarbeitet werden. Dagegen kann auf diese Arbeitsschritte, insbesondere das Vorwalzen, in der Regel verzichtet werden, wenn Dünnbrammen mit den heute üblichen Abmessungen verarbeitet werden.

Die erforderlichenfalls vorgewalzten Vorprodukte werden zu einem warmgewalzten Stahlflachprodukt mit einer Dicke von höchstens 6 mm fertig warmgewalzt (Arbeitsschritt e)). Die Temperatur AT der Vorprodukte beim Einlauf in die Fertigwarmwalzstaffel beträgt 1050 - 1150 °C. Die fertig warmgewalzten Stahlflachprodukte verlassen die Fertigwarmwalzstaffel mit einer Temperatur ET von 800 - 950 °C.

Nach dem Fertigwarmwalzen wird das erhaltene warmgewalzte Stahlflachprodukt im Arbeitsschritt f) mit einer mittleren Abkühlgeschwindigkeit von 30 - 300 K/s, insbesondere mindestens 70 K/s, auf eine Haspeltemperatur von 500 - 650 °C abgekühlt. Entscheidend hierbei ist die Einhaltung der Haspeltemperatur, während die Durchführung der Kühlung an eine bestehende Anlage angepasst werden kann. So ist die Kühlung bevorzugt mittels Wasser vorzunehmen, wobei die Wasserkühlung durch Pausenzeiten unterbrochen werden kann, bei denen das Band lediglich durch die Umgebungsatmosphäre (Luft) abgekühlt wird. Hierbei sind unterschiedlichste Kombinationen an Wasser- und Luftabkühlungsphasen denkbar.

Es hat sich zudem als zweckmäßig erwiesen, wenn zwischen dem Ende des Fertigwalzens und dem Beginn der Kühlung eine mittlere Pausenzeit von 1 - 15 Sekunden eingehalten wird, in der das warmgewalzte Stahlflachprodukt an Luft verweilt. Auf diese Weise wird ein gleichmäßiger Rekristallisationszustand im Warmband erreicht, der bei der Abkühlung eine gleichmäßige Umwandlung des Gefüges zur Folge hat. Dies hat einen positiven Einfluss sowohl auf die Gleichmäßigkeit der mechanischen Eigenschaften des Warmbandes als auch auf die Ebenheit des Warmbandes.

Bei der durch die Abkühlung erreichten Haspeltemperatur HT wird das jeweilige warmgewalzte Stahlflachprodukt anschließend zu einem Coil gehaspelt (Arbeitsschritt g)). Eine Haspeltemperatur unter 500 °C führt zu einer wesentlich höheren Festigkeit und Dehngrenze und würde das anschließende Kaltwalzen unnötig erschweren. Oberhalb einer Temperatur von 650 °C nimmt die Gefahr der Korngrenzenoxidation zu. Deshalb soll maximal bei einer Haspeltemperatur von 650 °C gehaspelt werden. Als in Hinblick auf die angestrebten Eigenschaften von erfindungsgemäß erzeugtem Stahlflachprodukt besonders vorteilhaft hat sich eine Haspeltemperatur von 530 - 600 °C herausgestellt.

Das warmgewalzte Stahlflachprodukt wird nun im Coil auf Raumtemperatur abgekühlt (Arbeitsschritt h)).

Nach der Abkühlung im Coil durchläuft das warmgewalzte Stahlflachprodukt eine Entzunderungsbehandlung, bei der das Stahlflachprodukt durch Beizen oder in einer anderen geeigneten Weise von auf ihm haftenden Zunder befreit wird (Arbeitsschritt i)).

Bei einer im Hinblick auf die Optimierung der Oberfächenbeschaffenheit praxisgerechten Variante erfolgt das Entzundern durch ein Beizen, bei dem das Stahlflachprodukt über eine Beizzeit Bt von 30 - 250 Sekunden durch ein mit einer Beizsäure gefülltes Beizbecken geführt wird. Bei der Beizsäure kann es sich beispielsweise um 25 %-ige Schwefelsäure ($H_2SO_4$) handeln, die auf eine Temperatur von 70 - 98 °C, erwärmt ist. Badtemperaturen von 85 - 95 °C haben sich hier in praktischen Versuchen besonders bewährt. Ist die Beizzeit zu kurz, so besteht bei einem verstärkten Zunderbefall die Gefahr, dass Zunderreste an der Bandoberfläche verbleiben.

Der Vorteil einer Beizbehandlung besteht auch darin, dass durch den mit dem Beizen einhergehenden Materialabtrag die oberflächennahen Schichten entfernt werden, die von einer Korngrenzenoxidation befallen sein könnten. Jedoch würde bei einer zu langen Beizzeit zu viel Material entfernt mit der Folge, dass sich Oberflächenunregelmäßigkeiten einstellen. Diese können am fertigen kaltgewalzten Stahlflachprodukt Banddickenschwankungen und damit einhergehend uneinheitliche mechanische Eigenschaften verursachen. Auch führen unregelmäßig ausgebildete Oberflächen im Fall, dass das fertige Stahlflachprodukt mit einer metallischen Schutzbeschichtung belegt werden soll, zu einer ungleichmäßigen Schichtausbildung. Dies gilt insbesondere, wenn die Beschichtung durch Feuerbeschichten aufgetragen werden soll.

Im folgenden Arbeitsschritt j) wird das warmgewalzte Stahlflachprodukt zu einem kaltgewalzten Stahlflachprodukt mit einer Dicke von 0,6 - 2,9 mm kaltgewalzt. Der über das Kaltwalzen erzielte Kaltwalzgrad KWG beträgt 40 - 85 % (KWG = (dW - D)/dW * 100% mit dW = Dicke des Stahlflachprodukts vor dem Kaltwalzen und D = Dicke des fertig kaltgewalzten Stahlflachprodukts).

Das kaltgewalzte Stahlflachprodukt durchläuft dann im Arbeitsschritt k) einen im kontinuierlichen Durchlauf absolvierten Glühprozess. Hierbei wird das Band in einem oder mehreren Schritten auf eine Glühtemperatur GT von 760 - 860 °C gebracht und in diesem Glühtemperaturbereich über eine Glühdauer Gt gehalten, für die gilt Gtu ≤ Gt ≤ Gto. Die Untergrenze Gtu und die Obergrenze Gto der in Sekunden angegebenen Glühdauer Gt wird dabei in Abhängigkeit von der in mm angegebenen Dicke d des kaltgewalzten Stahlflachprodukts wie folgt ermittelt:

$$\text{Gtu [s]} = 3{,}56*D^2[s/mm^2] - 5{,}1*D[s/mm] + 9{,}8 \text{ s}$$

$$\text{Gto [s]} = -21{,}4*D^2[s/mm^2] + 132{,}8*D[s/mm] + 47 \text{ s}$$

Die minimale Glühdauer Gtu und die Mindestglühtemperatur von 760 °C dürfen nicht unterschritten werden, da sonst ein zu geringer Anteil an Austenit gebildet wird. Dies würde bei der folgenden Abkühlung zu einem geringeren Anteil an Martensit und damit zur Absenkung der Dehngrenze und der Zugfestigkeit führen. Zudem muss sichergestellt werden, dass insbesondere bei dickeren Bändern die vollständige Durchwärmung erreicht wird. Anderenfalls würde sich bezogen auf die Bandbreite an den seitlichen Rändern der kaltgewalzten Stahlflachprodukte ein wesentlich anderes Gefüge einstellen als in ihrer Mitte. Gleiches gilt bei Betrachtung über die Blechdicke. Das Gefüge im Bereich der Oberfläche wäre bei einer zu kurzen Glühdauer Gt und einer zu niedrigen Glühtemperatur GT ein anderes als in der Dickenmitte des Stahlflachprodukts. Dieses hätte stark streuende mechanische Eigenschaften zur Folge. Durch Einhaltung der erfindungsgemäß bezüglich der Glühdauer Gt und Glühtemperatur GT gemachten Vorgaben wird dagegen ein Stahlflachprodukt erhalten, das sich durch eine besonders homogene Eigenschaftsverteilung auszeichnet. Bei Überschreitung der maximalen Glühdauer Gto oder Glühtemperaturen GT von mehr als 860 °C bestünde die Gefahr, dass es zu Korngrenzenoxidation oder zur Bildung unerwünschter Oxide an der Oberfläche des Stahlflachprodukts kommt. Zu den unerwünschten Oxiden, deren Entstehung durch die erfindungsgemäße Vorgehensweise verhindert wird, zählen Eisenoxid, Manganoxid, Aluminiumoxid, Siliziumoxid oder Chromoxid.

Das warmgewalzte Stahlflachprodukt wird vor dem Kaltwalzen zur Entzunderung und zum Abtrag von mit Korngrenzenoxidation behafteten Oberflächenschichten gebeizt. Hierbei werden im Hinblick auf eine Minimierung der Korngrenzenoxidation innerhalb der erfindungsgemäßen Vorgaben die Haspeltemperatur HT, die Glühtemperatur GT, die Glühdauer Gt und die Beizdauer Bt gemäß folgender Formel aufeinander abgestimmt:

$$(HT*GT*Gt)/Bt^2 \leq 50000$$

Bei Einhaltung dieser Bedingung und Berücksichtigung der übrigen erfindungsgemäßen Vorgaben lässt sich mit optimaler Betriebssicherheit gewährleisten, dass die Korngrenzenoxidation stets auf eine an die Oberfläche des Stahlsubstrats grenzende Schicht beschränkt ist, deren Tiefe maximal 5 μm ist. Gleichzeitig wird durch Einhaltung dieser Bedingung die Bildung von zu grobem Gefüge sicher vermieden, welches wiederum die Festigkeit des Stahlflachprodukts herabsetzen würde.

Nach dem Glühen wird das kaltgewalzte Stahlflachprodukt auf eine Zwischentemperatur ZT von 400 bis 550 °C abgekühlt (Arbeitsschritt l)). Diese Abkühlung kann in einem oder mehreren Schritten durchgeführt werden. Entscheidend ist, dass in einem Temperaturbereich von 650 °C bis 550 °C eine Abkühlrate von mindestens 2 K/s und höchstens 100 K/s eingehalten wird. Auf diese Weise kann die Bildung von Perlit im erfindungsgemäß legierten Stahlflachprodukt weitestgehend vermieden werden. Ein großer Anteil von Perlit im Gefüge würde zu einer Absenkung der Festigkeit führen. Würde die Abkühlrate 100 K/s überschreiten, so würde dadurch ein zu hoher Anteil an Martensit gebildet, der wiederum zu einer deutlichen Herabsetzung der Bruchdehnung führen würde.

Bei der Zwischentemperatur ZT von 400 °C bis 550 °C kann gemäß einer ersten Variante eine Schmelztauchbeschichtung des Stahlflachprodukts durchgeführt werden. Bevorzugt werden hierzu Beschichtungsbäder mit einem Anteil von mindestens 75 Gew.-% Zink verwendet. Nach dem Schmelztauchbeschichten kann optional ein Galvannealing-Prozess durchgeführt werden, wobei die Wiedererwärmung auf maximal 450 - 550 °C erfolgt. Anschließend erfolgt die folgende Abkühlung auf Raumtemperatur. Sowohl die weiteren Bedingungen der Schmelztauchbeschichtung als auch die Bedingungen der optional durchgeführten Galvannealing-Behandlung entsprechen dabei dem im Stand der Technik Üblichen.

Alternativ zu einer Schmelztauchbeschichtung kann das Stahlflachprodukt gemäß einer zweiten Variante des erfindungsgemäßen Verfahrens von der Zwischentemperatur ZT aus ohne eine Beschichtungsbehandlung mit Abkühlungsgeschwindigkeiten von 0,1 K/s bis 50 K/s in einem oder mehreren Schritten kontinuierlich auf Raumtemperatur abgekühlt werden. Optional ist bei dieser Variante im Anschluss an die Abkühlung auf Raumtemperatur ein elektrolytisches Beschichten möglich.

Unabhängig davon, ob das Stahlflachprodukt mit einer Beschichtung versehen oder unbehandelt geblieben ist, kann das Stahlflachprodukt optional dressiert werden, wobei das Dressieren mit einem Kaltwalzgrad von maximal 1,5 % erfolgen sollte. Werden höhere Dressiergrade angewendet, erhöht sich zwar die Dehngrenze, es müsste jedoch auch dafür ein zu hoher Bruchdehnungsverlust in Kauf genommen werden.

Nachfolgend wird die Erfindung anhand von Ausführungsbeispielen näher erläutert.

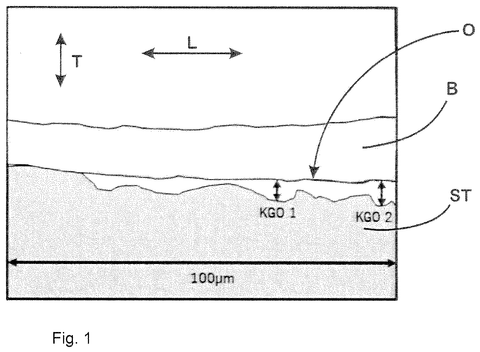

Die Fig. 1 zeigt schematisch einen vergrößerten Ausschnitt eines zur Ermittlung der maximalen Eindringtiefe KGO der Korngrenzenoxidation als Schliff längs zur Walzrichtung angefertigten Schliffbilds einer aus der Bandachse entnommenen Stahlflachprodukt-Probe.

Die an den in der nachfolgend im Einzelnen erläuterten Weise erzeugten Stahlflachprodukten ermittelten jeweiligen Eindringtiefen KGO1, KGO2, ... der Korngrenzenoxidation sind demnach über eine in Walzrichtung ausgerichtete Messlänge von 100 $\mu$m als in Dickenrichtung T, d. h. quer zur Längserstreckung L der Probe, gemessener jeweiliger Abstand zwischen der Oberfläche O des Stahlsubstrats ST und dem Punkt im Stahlsubstrat ST erfasst worden, an dem an der jeweiligen Messstelle keine Korngrenzenoxidation mehr festgestellt werden konnte. Das Stahlsubstrat ST konnte dabei mit einer metallischen Schutzbeschichtung B belegt sein. Auch in diesem Fall erfolgte die Messung der jeweiligen Eindringtiefe KGO1, KGO2, ... ausgehend von der Oberfläche O des Stahlsubstrats ST.

Aus der Menge der so systematisch in über die Längsrichtung L verteilten Abstände erfassten Messwerte KGO1, KGO2, ..., ist dann das Maximum bestimmt worden (in Fig. 1 der Messwert "KGO2") und dem jeweils untersuchten Stahlflachprodukt als Eindringtiefe "KGO" der Korngrenzenoxidation zugeordnet worden.

Zur Erprobung der Erfindung sind erfindungsgemäße Schmelzen A - H sowie zusätzlich zwei nicht erfindungsgemäße Vergleichsschmelzen I,J mit den in Tabelle 1 angegebenen Zusammensetzungen erschmolzen und zu Brammen vergossen worden.

Die als Vorprodukt dienenden Brammen sind anschließend in den Versuchen 1 - 37 auf eine Vorwalztemperatur VT durcherwärmt und mit dieser Temperatur in herkömmlicher Weise vorgewalzt worden.

Daraufhin sind die Brammen mit einer Warmwalzanfangstemperatur AT in eine Fertigwarmwalzstaffel eingelaufen, in der sie in ebenso herkömmlicher Weise zu einem warmgewalzten Stahlflachprodukt mit einer Dicke dW fertig warmgewalzt worden sind.

Die fertig warmgewalzten Stahlflachprodukte haben die Warmwalzstaffel mit einer Warmwalzendtemperatur ET verlassen und sind dann mit einer Abkühlrate von 30 - 300K/s auf eine Haspeltemperatur HT abgekühlt worden. Zwischen dem Ende des Warmwalzens und dem Beginn der Abkühlung lag dabei jeweils eine mittlere Pausenzeit Pt.

Die auf die Haspeltemperatur HT abgekühlten warmgewalzten Stahlflachprodukte sind zu einem Coil gehaspelt und im Coil auf Raumtemperatur abgekühlt worden.

Anschließend haben die warmgewalzten Stahlflachprodukte innerhalb einer Beizzeit Bt ein auf 90 °C erwärmtes Beizbad durchlaufen, das aus einer 25 %-igen Schwefelsäure ($H_2SO_4$) bestand.

Die so gebeizten Stahlflachprodukte sind dann jeweils mit einem Kaltwalzgrad KWG zu kaltgewalzten Stahlflachprodukten kaltgewalzt worden, die eine Dicke D aufwiesen.

Die kaltgewalzten Stahlflachprodukte sind im kontinuierlichen Durchlauf einer Glühbehandlung unterzogen worden, bei der sie über eine Glühdauer Gt auf einer Glühtemperatur GT gehalten worden sind.

Nach dem Glühen sind die Stahlflachprodukte ausgehend von der Glühtemperatur GT mit einer Abkühlrate AK auf eine Zwischentemperatur ZT abgekühlt worden, von der ausgehend sie dann mit einer Abkühlrate RK auf Raumtemperatur gekühlt worden sind.

Die Stahlflachprodukte wurden verschiedenen Oberflächenbehandlungen unterzogen. So sind neben unbehandelten Proben einige Proben schmelztauchbeschichtet, andere Proben schmelztauchbeschichtet und galvannealingbehandelt und wieder andere Proben elektrolytisch beschichtet worden.

Abschließend sind die kaltgewalzten Stahlflachprodukte einem Dressierwalzen unterzogen worden, bei dem sie mit einem Kaltwalzgrad D° kaltgewalzt worden sind.

In den Tabellen 2a und 2b sind für die Versuche 1 - 37 die Stahllegierungen der jeweils verarbeiteten Vorprodukte sowie die jeweiligen Betriebsparameter Vorwalztemperatur VT, Warmwalzanfangstemperatur AT, Warmwalzendtemperatur ET, Pausenzeit Pt, Haspeltemperatur HT, Warmbanddicke dW, Beizzeit Bt, Kaltwalzgrad KWG, Dicke des kaltgewalzten Stahlflachprodukts d, Glühtemperatur GT, Glühdauer Gt, Abkühlrate AK, Zwischentemperatur ZT, die jeweilige Abkühlrate RK der zweiten Abkühlstufe, Dressiergrad D° sowie das Produkt Gt*GT*HT/Bt[2] angegeben. In der Spalte "OF" sind die unbeschichtet gebliebenen Proben durch "U", die nur schmelztauchbeschichteten Proben mit "SB", die schmelztauchbeschichteten und galvannealing-behandelten Proben mit "SB,GA" und der Galvannealing-Temperatur, und die elektrolytisch-beschichteten Proben mit "EB" bezeichnet. Die Versuche 1 - 32 sind dabei sowohl hinsichtlich der Legierung der jeweils verarbeiteten Brammen als auch hinsichtlich der Betriebsparameter in erfindungsgemäßer Weise durchgeführt worden, wogegen bei den Versuchen 33 - 37 zumindest die Legierung des verarbeiteten Stahls oder einer der Betriebsparameter nicht erfindungsgemäß waren.

Zu den bei den Versuchen 1 - 37 erhaltenen kaltgewalzten Stahlflachprodukten sind die Dehngrenze Rp0,2, die Zugfestigkeit Rm, die Bruchdehnung A80, der n-Wert, die Eindringtiefe der Korngrenzenoxidation KGO, sowie der Ferritanteil F, der Martensitanteil M, der Restaustenitanteil RA, die Summe "Sonstige" der sonstigen Bestandteile des Gefüges und die aus dem Martensitanteil M, dem Restautenitanteil RA und der Summe "Sonstige" gebildete Summe $\Sigma$ in der oben bereits erläuterten Weise ermittelt worden. Die Ergebnisse dieser Untersuchungen sind in den Tabellen 3a und 3b zusammengefasst.

Diese Ergebnisse zeigen, dass die erfindungsgemäß legierten und in den erfindungsgemäß durchgeführten Versuchen 1 - 32 erzeugten Stahlflachprodukte jeweils eine hohe Bruchdehnung A80 von mehr als 21 % bei Dehngrenzen Rp0,2 von mehr als 330 MPa und Zugfestigkeiten von mehr als 580 MPa erreichen.

Weist der Stahl des jeweiligen Stahlflachprodukts, wie am Beispiel des Stahls I verdeutlicht, eine zu hohe Summe der Gehalte an C, Mn, Cr und Si auf, so erreicht das aus diesem nicht erfindungsgemäßen Stahl gefertigte Stahlflachprodukt die geforderte Bruchdehnung von mindestens 20 % dagegen selbst dann nicht, wenn es im Übrigen in erfindungsgemäßer Weise erzeugt wird (s. Versuch 33).

Die Vergleichslegierung J enthält im Gegensatz zu den Vorgaben der Erfindung Titan in wirksamen Mengen, wodurch selbst bei im Übrigen erfindungskonformer Herstellung (Versuch 33) zwar die Festigkeitswerte erhöht, jedoch die geforderte Bruchdehnung nicht erreicht wird. Auch ist der für dieses Beispiel bestimmbare n-Wert zu gering.

Der zwar von der erfindungsgemäß legierten Stahlschmelze A ausgehende, jedoch aufgrund einer entgegen der Empfehlung der Erfindung zu kurzen Beizzeit nicht erfindungsgemäß prozessierte Versuch 37 belegt, dass sich durch eine ausreichend lange Beizzeit nicht nur die Zunderreste, sondern auch die beginnende Korngrenzenoxidation so von der Bandoberfläche entfernen lassen, dass die Tiefe der Korngrenzenoxidation auf den erfindungsgemäß vorgeschriebenen Bereich beschränkt bleibt.

Der ebenfalls vom erfindungsgemäß legierten Stahl A ausgehende, jedoch in Bezug auf die Dauer der Glühung des Kaltbands nicht erfindungsgemäß prozessierte Vergleichsversuch 36 belegt zudem, dass auch eine zu lange Glühdauer die Korngrenzenoxidation fördert und zu Eindringtiefen führt, die deutlich oberhalb der erfindungsgemäß zulässigen Obergrenze von maximal 5 $\mu$m liegen. Auch ist durch die zu lange Glühdauer nach der Abkühlung die Summe der neben Ferrit sonstigen Bestandteile des Gefüges des beim Versuch 36 erzeugten Stahlflachprodukts, d. h. die aus dem Martensit-, dem Restaustenit und den sonstigen Phasen gebildete Summe, zu gering.

Schließlich zeigt der Vergleichsversuch 35, dass bei Unterschreitung der erfindungsgemäß vorgegebenen Mindestdauer der Glühung des kaltgewalzten Stahlflachprodukts zu wenig Austenit gebildet wird. Dies hat zur Folge, dass ein zu geringer Anteil an Martensit und damit einhergehend eine zu geringe Summe der im Gefüge außer Ferrit enthaltenen Gefügebestandteile gebildet wird, wodurch wiederum die mechanischen Eigenschaften des beim Vergleichsversuch 35 erzeugten Stahlflachprodukts gegenüber den erfindungsgemäß erzeugten Stahlflachprodukten abfallen.

Tabelle 1

| Stahl | | C | Si | Mn | Al | Cr | P | S | Cu | Nb | Mo | N | Ti | V | Ni | B | C+Mn+Cr+Si | Si+Al |
|---|---|---|---|---|---|---|---|---|---|---|---|---|---|---|---|---|---|---|
| ERFINDUNG | A | 0,086 | 0,225 | 1,8 | 0,037 | 0,307 | 0,015 | 0,003 | 0,02 | 0,001 | 0,013 | 0,0039 | 0,002 | 0,001 | 0,022 | 0,0003 | 2,418 | 0,262 |
| | B | 0,095 | 0,2 | 1,53 | 0,05 | 0,48 | 0,013 | 0,0018 | 0,016 | 0,002 | 0,007 | 0,0051 | 0,001 | 0,002 | 0,024 | 0,0005 | 2,305 | 0,250 |
| | C | 0,08 | 0,251 | 1,93 | 0,025 | 0,224 | 0,02 | 0,001 | 0,02 | 0,007 | 0,011 | 0,0057 | 0,004 | 0,008 | 0,019 | 0,0003 | 2,485 | 0,276 |
| | D | 0,075 | 0,231 | 1,98 | 0,072 | 0,349 | 0,009 | 0,0034 | 0,02 | 0,001 | 0,027 | 0,005 | 0,003 | 0,004 | 0,03 | 0,0006 | 2,635 | 0,303 |
| | E | 0,072 | 0,309 | 1,77 | 0,061 | 0,251 | 0,011 | 0,001 | 0,01 | 0,004 | 0,01 | 0,0044 | 0,005 | 0,01 | 0,04 | 0,0003 | 2,402 | 0,370 |
| | F | 0,064 | 0,278 | 1,64 | 0,053 | 0,323 | 0,01 | 0,0007 | 0,019 | 0,001 | 0,003 | 0,007 | 0,001 | 0,003 | 0,07 | 0,0004 | 2,305 | 0,331 |
| | G | 0,083 | 0,354 | 1,84 | 0,04 | 0,308 | 0,017 | 0,0026 | 0,042 | 0,005 | 0,019 | 0,0047 | 0,006 | 0,001 | 0,023 | 0,0005 | 2,585 | 0,394 |
| | H | 0,091 | 0,332 | 1,82 | 0,036 | 0,387 | 0,012 | 0,0028 | 0,018 | 0,002 | 0,045 | 0,0052 | 0,006 | 0,002 | 0,021 | 0,0005 | 2,63 | 0,368 |
| Vergleich | I | 0,083 | 0,382 | 1,95 | 0,033 | 0,473 | 0,015 | 0,0016 | 0,017 | 0,001 | 0,016 | 0,0056 | 0,002 | 0,001 | 0,022 | 0,0003 | 2,888 | 0,415 |
| | J | 0,087 | 0,208 | 1,63 | 0,037 | 0,316 | 0,008 | 0,0005 | 0,009 | 0,001 | 0,0025 | 0,0045 | 0,025 | 0,003 | 0,017 | 0,0004 | 2,241 | 0,245 |
| Alle Angaben in Gew.-%, Rest Eisen und sonstige unvermeidbare Verunreinigungen | | | | | | | | | | | | | | | | | | |

| | Stahl | Versuch | Warmwalzen | | | | | | Beizen | Kaltwalzen | | Glühen | | | | | | D° [%] | Gt*GT* HT/Bt$^2$ |
| | | | VT [°C] | AT [°C] | ET [°C] | Pt [s] | HT [°C] | dW [mm] | Bt [s] | KWG [%] | D [mm] | GT [°C] | Gt [s] | AK [K/s] | ZT [°C] | RK [K/s] | OF | | |
|---|---|---|---|---|---|---|---|---|---|---|---|---|---|---|---|---|---|---|---|
| E R F I N D U N G | A | 1 | 1250 | 1100 | 925 | 5 | 580 | 4,45 | 73 | 66 | 1,5 | 850 | 16 | 10 | 490 | 7,3 | SB | 0,6 | 1480 |
| | | 2 | 1250 | 1125 | 900 | 7 | 640 | 4,45 | 84 | 66 | 1,5 | 820 | 167 | 9 | 490 | 0,5 | SB | 0,6 | 12421 |
| | | 3 | 1300 | 1100 | 910 | 5 | 570 | 5,15 | 230 | 51 | 2,5 | 840 | 60 | 51 | 490 | 3,2 | SB | 0,5 | 543 |
| | | 4 | 1250 | 1100 | 900 | 2 | 580 | 4,45 | 121 | 66 | 1,5 | 810 | 11 | 7 | 500 | 2,3 | SB, GA (500°C) | 0,8 | 353 |
| | B | 5 | 1250 | 1100 | 900 | 0 | 520 | 4,45 | 83 | 66 | 1,5 | 780 | 19 | 9 | 460 | 42,4 | SB | 0,1 | 1119 |
| | | 6 | 1100 | 1050 | 925 | 0 | 580 | 4,45 | 47 | 66 | 1,5 | 840 | 122 | 2 | 460 | 13,8 | U | 0,7 | 26907 |
| | | 7 | 1150 | 1100 | 910 | 0 | 560 | 3,30 | 41 | 70 | 1,0 | 830 | 55 | 4 | 485 | 1,5 | U | 0,5 | 15208 |
| | | 8 | 1250 | 1100 | 900 | 0 | 580 | 1,80 | 59 | 67 | 0,6 | 840 | 11 | 8 | 485 | 21,3 | SB | 0,3 | 1540 |
| | C | 9 | 1250 | 1100 | 800 | 2 | 520 | 4,45 | 73 | 66 | 1,5 | 800 | 219 | 5 | 465 | 6,9 | U | 0,9 | 17096 |
| | | 10 | 1175 | 1100 | 900 | 6 | 580 | 3,75 | 90 | 73 | 1,0 | 800 | 19 | 4 | 470 | 11,1 | SB, GA (550°C) | 0,9 | 1088 |
| | | 11 | 1250 | 1100 | 930 | 0 | 610 | 4,60 | 67 | 57 | 2,0 | 850 | 215 | 70 | 540 | 1,0 | SB | 0,6 | 24833 |
| | | 12 | 1225 | 1100 | 900 | 14 | 580 | 4,00 | 55 | 63 | 1,5 | 815 | 12 | 7 | 470 | 7,2 | SB | 0,8 | 1875 |
| | D | 13 | 1250 | 1100 | 915 | 3 | 580 | 4,45 | 140 | 66 | 1,5 | 780 | 60 | 2 | 440 | 32,3 | SB, GA (480°C) | 1,2 | 1385 |
| | | 14 | 1250 | 1100 | 900 | 8 | 580 | 5,50 | 40 | 49 | 2,8 | 820 | 53 | 2 | 475 | 0,1 | U | 1 | 15754 |
| | | 15 | 1175 | 1100 | 900 | 6 | 570 | 3,30 | 54 | 70 | 1,0 | 810 | 80 | 53 | 525 | 1,9 | U | 0,6 | 12667 |
| | | 16 | 1250 | 1100 | 900 | 1 | 640 | 4,45 | 48 | 66 | 1,5 | 850 | 175 | 26 | 475 | 0,7 | EB | 0,3 | 41319 |
| | E | 17 | 1250 | 1100 | 850 | 9 | 580 | 4,45 | 165 | 66 | 1,5 | 805 | 17 | 11 | 460 | 50 | SB | 0,5 | 292 |
| | | 18 | 1175 | 1125 | 900 | 12 | 580 | 1,80 | 75 | 67 | 0,6 | 810 | 80 | 31 | 485 | 3,9 | SB | 0,4 | 6682 |
| | | 19 | 1200 | 1100 | 910 | 0 | 560 | 3,30 | 62 | 70 | 1,0 | 815 | 55 | 46 | 485 | 24,0 | SB | 0,6 | 6530 |
| | | 20 | 1125 | 1100 | 900 | 15 | 580 | 4,45 | 180 | 66 | 1,5 | 800 | 95 | 24 | 490 | 37,0 | EB | 0,3 | 1360 |

Tabelle 2a

EP 2 924 141 B1

| Stahl | Versuch | Warmwalzen | | | | | | Beizen | Kaltwalzen | | Glühen | | | | | | D° [%] | Gt*GT* HT/Bt² |
| | | VT [°C] | AT [°C] | ET [°C] | Pt [s] | HT [°C] | dW [mm] | Bt [s] | KWG [%] | D [mm] | GT [°C] | Gt [s] | AK [K/s] | ZT [°C] | RK [K/s] | OF | | |
| E R F I N D U N G | F | | | | | | | | | | | | | | | | | |
| | | 21 | 1250 | 1075 | 910 | 0 | 580 | 4,45 | 107 | 66 | 1,5 | 820 | 15 | 20 | 530 | 3,3 | U | 0,8 | 623 |
| | | 22 | 1300 | 1150 | 950 | 0 | 580 | 4,45 | 99 | 66 | 1,5 | 815 | 38 | 9 | 510 | 0,2 | SB | 0,8 | 1833 |
| | | 23 | 1200 | 1075 | 830 | 0 | 570 | 4,60 | 86 | 57 | 2,0 | 850 | 80 | 35 | 485 | 1,3 | SB | 0,6 | 5241 |
| | | 24 | 1250 | 1100 | 900 | 0 | 580 | 4,45 | 46 | 66 | 1,5 | 830 | 16 | 5 | 495 | 6,1 | SB | 1,4 | 3640 |
| | G | 25 | 1250 | 1100 | 900 | 11 | 580 | 3,75 | 41 | 73 | 1,0 | 795 | 100 | 15 | 500 | 0,3 | SB | 0,3 | 27430 |
| | | 26 | 1125 | 1075 | 850 | 4 | 580 | 4,45 | 55 | 66 | 1,5 | 810 | 183 | 6 | 475 | 2,4 | U | 0,3 | 28421 |
| | | 27 | 1225 | 1100 | 840 | 4 | 550 | 5,15 | 78 | 51 | 2,5 | 860 | 190 | 3 | 485 | 29,8 | U | 0,5 | 14772 |
| | | 28 | 1225 | 1125 | 900 | 7 | 580 | 4,00 | 58 | 63 | 1,5 | 810 | 184 | 27 | 500 | 7,0 | SB | 0,6 | 25697 |
| | H | 29 | 1300 | 1150 | 950 | 9 | 580 | 4,45 | 108 | 66 | 1,5 | 800 | 58 | 18 | 480 | 0,4 | SB | 0,5 | 2307 |
| | | 30 | 1250 | 1125 | 890 | 0 | 580 | 4,45 | 190 | 66 | 1,5 | 850 | 16 | 8 | 480 | 2,7 | EB | 0,5 | 219 |
| | | 31 | 1125 | 1150 | 880 | 10 | 550 | 5,15 | 133 | 51 | 2,5 | 800 | 230 | 4 | 460 | 15,3 | EB | 0,8 | 5721 |
| | | 32 | 1250 | 1125 | 900 | 6 | 580 | 5,50 | 60 | 49 | 2,8 | 830 | 27 | 5 | 530 | 27,8 | SB | 0,5 | 3611 |
| V E R G L E I C H | I | 33 | 1250 | 1100 | 900 | 5 | 580 | 4,45 | 59 | 66 | 1,5 | 820 | 13 | 7 | 490 | 7,0 | SB | 0,8 | 1776 |
| | J | 34 | 1250 | 1100 | 900 | 7 | 580 | 4,45 | 61 | 66 | 1,5 | 820 | 14 | 5 | 490 | 7,8 | SB | 0,3 | 1789 |
| | A | 35 | 1250 | 1100 | 900 | 7 | 580 | 4,45 | 69 | 66 | 1,5 | 810 | 5 | 7 | 500 | 7,5 | SB | 0,8 | 493 |
| | A | 36 | 1250 | 1100 | 900 | 6 | 580 | 4,45 | 58 | 66 | 1,5 | 810 | 210 | 7 | 500 | 6,9 | SB | 0,8 | 29328 |
| | A | 37 | 1250 | 1100 | 900 | 5 | 580 | 4,45 | 10 | 66 | 1,5 | 810 | 13 | 9 | 490 | 7,3 | SB | 0,5 | 61074 |

Tabelle 2b

## Tabelle 3a

| | Stahl | Versuch | Rp0,2 [MPa] | Rm [MPa] | A80 [%] | n-Wert | KGO [μm] | Gefüge [Flächen-%] | | | | |
|---|---|---|---|---|---|---|---|---|---|---|---|---|
| | | | | | | | | F | M | RA | Sonstige | Σ |
| ERFINDUNG | A | 1 | 401 | 656 | 24,3 | 0,143 | 0,5 | 75 | 20 | 2,5 | 2,5 | 25,0 |
| | | 2 | 399 | 658 | 24,6 | 0,143 | 4,5 | 80 | 15 | 4,0 | 1,0 | 20,0 |
| | | 3 | 396 | 647 | 25,3 | 0,168 | 2,0 | 75 | 15 | 6,0 | 4,0 | 25,0 |
| | | 4 | 416 | 693 | 22,6 | 0,141 | 0,0 | 70 | 25 | 3,5 | 1,5 | 30,0 |
| | B | 5 | 379 | 601 | 26,1 | 0,179 | 1,0 | 80 | 15 | 4,5 | 0,5 | 20,0 |
| | | 6 | 396 | 604 | 25,8 | 0,132 | 4,0 | 80 | 15 | 1,5 | 3,5 | 20,0 |
| | | 7 | 385 | 640 | 27,9 | 0,170 | 1,5 | 70 | 20 | 5,5 | 4,5 | 30,0 |
| | | 8 | 375 | 668 | 21,9 | 0,156 | 0,0 | 75 | 20 | 2,5 | 2,5 | 25,0 |
| | C | 9 | 376 | 685 | 21,6 | 0,155 | 1,5 | 65 | 30 | 4,5 | 0,5 | 35,0 |
| | | 10 | 386 | 666 | 20,6 | 0,152 | 0,5 | 75 | 15 | 3,5 | 6,5 | 25,0 |
| | | 11 | 398 | 627 | 26,5 | 0,149 | 4,5 | 70 | 25 | 3,5 | 1,5 | 30,0 |
| | | 12 | 362 | 635 | 23,7 | 0,160 | 0,0 | 80 | 15 | 3,5 | 1,5 | 20,0 |
| | D | 13 | 341 | 683 | 23,6 | 0,163 | 2,5 | 70 | 20 | 4,0 | 6,0 | 30,0 |
| | | 14 | 355 | 701 | 23,2 | 0,142 | 2,0 | 65 | 30 | 2,5 | 2,5 | 35,0 |
| | | 15 | 372 | 634 | 25,3 | 0,178 | 3,0 | 75 | 20 | 5,0 | 0,0 | 25,0 |
| | | 16 | 333 | 669 | 22,8 | 0,171 | 4,5 | 65 | 25 | 5,0 | 5,0 | 35,0 |
| | E | 17 | 336 | 644 | 23,7 | 0,175 | 0,5 | 70 | 20 | 3,5 | 6,5 | 30,0 |
| | | 18 | 346 | 636 | 27,5 | 0,150 | 2,5 | 75 | 15 | 7,0 | 3,0 | 25,0 |
| | | 19 | 383 | 645 | 27,0 | 0,172 | 1,5 | 65 | 25 | 5,5 | 4,5 | 35,0 |
| | | 20 | 331 | 626 | 24,1 | 0,149 | 2,0 | 80 | 15 | 2,5 | 2,5 | 20,0 |

(fortgesetzt)

| Stahl | Versuch | Rp0,2 [MPa] | Rm [MPa] | A80 [%] | n-Wert | KGO [$\mu$m] | Gefüge [Flächen-%] | | | | |
|---|---|---|---|---|---|---|---|---|---|---|---|
| | | | | | | | F | M | RA | Sonstige | $\Sigma$ |
| F | 21 | 340 | 582 | 25,8 | 0,162 | 0,0 | 80 | 10 | 6,0 | 4,0 | 20,0 |
| | 22 | 343 | 604 | 25,3 | 0,173 | 1,0 | 75 | 20 | 4,0 | 1,0 | 25,0 |
| | 23 | 390 | 616 | 27,6 | 0,151 | 2,5 | 70 | 15 | 6,5 | 3,5 | 25,0 |
| | 24 | 350 | 587 | 25,7 | 0,145 | 0,5 | 80 | 15 | 2,0 | 3,0 | 20,0 |
| G | 25 | 380 | 698 | 21,3 | 0,157 | 3,5 | 70 | 25 | 1,5 | 3,5 | 30,0 |
| | 26 | 383 | 651 | 23,1 | 0,164 | 0,5 | 70 | 20 | 4,5 | 5,5 | 30,0 |
| | 27 | 355 | 663 | 25,4 | 0,143 | 3,0 | 75 | 20 | 3,0 | 2,0 | 25,0 |
| | 28 | 415 | 686 | 22,8 | 0,151 | 3,5 | 70 | 25 | 2,0 | 3,0 | 30,0 |
| H | 29 | 388 | 659 | 24,2 | 0,157 | 1,0 | 80 | 15 | 3,5 | 1,5 | 20,0 |
| | 30 | 362 | 681 | 22,2 | 0,150 | 0,5 | 70 | 25 | 3,0 | 2,0 | 30,0 |
| | 31 | 350 | 673 | 24,1 | 0,163 | 4,0 | 75 | 20 | 3,0 | 2,0 | 25,0 |
| | 32 | 342 | 635 | 25,4 | 0,155 | 1,0 | 80 | 15 | 4,5 | 0,5 | 20,0 |

Tabelle 3b

| | Stahl | Versuch | Rp0,2 [MPa] | Rm [MPa] | A80 [%] | n-Wert | KGO [μm] | Gefüge [Flächen-%] | | | | |
|---|---|---|---|---|---|---|---|---|---|---|---|---|
| | | | | | | | | F | M | RA | Sonstige | Σ |
| V E R G L E I C H | I | 33 | 402 | 751 | 17,8 | 0,136 | 6,5 | 60 | 35 | 3,5 | 1,5 | 40,0 |
| | J | 34 | 392 | 727 | 19,1 | 0,122 | 0,5 | 65 | 35 | 0,0 | 0,0 | 35,0 |
| | A | 35 | 357 | 562 | 26,3 | 0,161 | 0,0 | 85 | 5 | 4,5 | 5,5 | 15,0 |
| | A | 36 | 341 | 552 | 23,9 | 0,172 | 7,5 | 90 | 5 | 2,5 | 2,5 | 10,0 |
| | A | 37 | 365 | 615 | 24,4 | 0,165 | 7,0 | 80 | 15 | 3,5 | 1,5 | 20,0 |

**Patentansprüche**

1. Kaltgewalztes Stahlflachprodukt, das eine Dehngrenze Rp0,2 von mindestens 320 MPa, eine Bruchdehnung A80 von mindestens 20 % und ein Gefüge mit (in Flächen-%) 62 - 82 % Ferrit, 10 - 30 % Martensit, 1,5 - 8 % Restaustenit und in Summe maximal 10 % sonstigen Gefügebestandteilen besitzt, wobei das Stahlflachprodukt aus einer wie folgt zusammengesetzten Stahllegierung besteht (in Ges.-%):

| | |
|---|---|
| C: | 0, 06 - 0,1 %, |
| Si: | 0,15 - 0,4 %, |
| Mn: | 1,5 - 2 %, |
| Cr: | 0,2 - 0,5 %, |
| Al: | $\leq$ 0,1 %, |

wobei die Summe der Gehalte an C, Si, Mn und Cr mindestens gleich 2,3 % und höchstens gleich 2,8 % und die Summe der Gehalte an Si und Al höchstens gleich 0,4 % betragen,

| | |
|---|---|
| P: | $\leq$ 0,03 %, |
| S: | $\leq$ 0,006 %, |
| N: | $\leq$ 0,008 %, |

weitere technisch unvermeidbare Verunreinigungen, zu denen $\leq$ 0,0006 % B, $\leq$ 0,02 % V, sowie jeweils $\leq$ 0,01 % Nb, Ti sowie jeweils $\leq$ 0,1 % Mo, Ni und Cu gehören,
Rest Eisen
und wobei bezogen auf die jeweils betrachtete Gesamtfläche die Summe der Flächenanteile an Martensit, Restaustenit und den sonstigen Gefügebestandteilen seines Gefüges mindestens 18 Flächen-% beträgt.

2. Stahlflachprodukt nach Anspruch 1, **dadurch gekennzeichnet, dass** sein Al-Gehalt 0,02 - 0,05 Gew.-% beträgt.

3. Stahlflachprodukt nach einem der voranstehenden Ansprüche, **dadurch gekennzeichnet, dass** bezogen auf die jeweils betrachtete Gesamtfläche die Summe der Flächenanteile an Martensit, Restaustenit und den sonstigen Gefügebestandteilen seines Gefüges höchstens 38 Flächen-% beträgt.

4. Verfahren zur Herstellung eines gemäß einem der Ansprüche 1 bis 3 ausgebildeten Stahlflachprodukts, umfassend folgende Arbeitsschritte:

a) Erschmelzen einer Stahlschmelze, die (in Gew.-%) aus 0,06 - 0,1 % C, 0,15 - 0,4 % Si, 1,5 - 2 % Mn, 0,2 - 0,5 % Cr, bis zu 0,1 % Al, wobei die Summe der Gehalte an C, Si, Mn und Cr mindestens gleich 2,3 % und höchstens gleich 2,8 % und die Summe der Gehalte an Si und Al höchstens gleich 0,4 %, bis zu 0,03 % P, bis zu 0,006 % S, bis zu 0,008 % N sowie weiteren technisch unvermeidbaren Verunreinigungen, zu denen $\leq$ 0,0006 % B, $\leq$ 0,02 % V, sowie jeweils $\leq$ 0,01 % Nb, Ti sowie jeweils $\leq$ 0,1 % Mo, Ni und Cu gehören, und als Rest aus Eisen besteht;
b) Vergießen der Stahlschmelze zu einem Vorprodukt, bei dem es sich um eine Bramme oder Dünnbramme handelt;
c) Durcherwärmen des Vorprodukts auf eine Temperatur von 1100 - 1300 °C;
d) optionales Entzundern und Vorwalzen des durcherwärmten Vorprodukts;
e) Fertigwarmwalzen des Vorprodukts zu einem warmgewalzten Stahlflachprodukt, wobei die Temperatur (AT) des Vorprodukts am Anfang des Fertigwarmwalzens 1050 - 1150 °C und die Temperatur (ET) des fertig warmgewalzten Stahlflachprodukts am Ende des Fertigwarmwalzens 800 - 950 °C beträgt;
f) Abkühlen des fertig warmgewalzten und optional zuvor über die Pausenzeit gehaltenen Stahlflachprodukts auf eine Haspeltemperatur (HT) von 500 - 650 °C;
g) Haspeln des auf die Haspeltemperatur (HT) abgekühlten warmgewalzten Stahlflachprodukts;
h) Abkühlen des warmgewalzten Stahlflachprodukts im Coil auf Raumtemperatur;
i) Entzundern des abgekühlten warmgewalzten Stahlflachprodukts;
j) Kaltwalzen des warmgewalzten Stahlflachprodukts zu einem kaltgewalzten Stahlflachprodukt, wobei der über das Kaltwalzen erzielte Kaltwalzgrad 40 - 85 % und die Dicke des fertig kaltgewalzten Stahlflachprodukts 0,6 - 2,9 mm beträgt;

k) im kontinuierlichen Durchlauf erfolgendes Glühen des kaltgewalzten Stahlflachprodukts, wobei das Stahlflachprodukt zunächst in einem oder mehreren Schritten auf eine Glühtemperatur (GT) von 760 - 860 °C gebracht und dann in diesem Glühtemperaturbereich über eine Glühdauer (Gt) gehalten wird, die in einem Glühdauerbereich liegt, dessen Untergrenze Gtu und Obergrenze Gto in Abhängigkeit von der jeweiligen Dicke d des kaltgewalzten Stahlflachprodukts wie folgt ermittelt wird:

$$Gtu\ [s] = 3,56*D^2[s/mm^2] - 5,1*D[s/mm] + 9,8\ s$$

$$Gto\ [s] = -21,4*D^2[s/mm^2] + 132,8*D[s/mm] + 47\ s$$

l) Abkühlen des geglühten Stahlflachprodukts in einem oder mehreren Schritten auf eine Zwischentemperatur ZT von 400 - 550 °C, wobei die Abkühlung mindestens im Temperaturbereich von 550 - 650 °C mit einer Abkühlrate von 2 - 100 K/s erfolgt;
m') Schmelztauchbeschichten des auf die Zwischentemperatur ZT abgekühlten Stahlflachprodukts
oder
m") direktes Abkühlen des Stahlflachprodukts von der Zwischentemperatur mit einer Abkühlgeschwindigkeit RK von 0,1 - 50 K/s auf Raumtemperatur.

5. Verfahren nach Anspruch 4, **dadurch gekennzeichnet, dass** das fertig warmgewalzte Stahlflachprodukt zwischen dem Warmwalzen (Arbeitsschritt e)) und der Abkühlung (Arbeitsschritt f)) an Luft über eine Pausenzeit von 1 - 15 Sekunden gehalten wird.

6. Verfahren nach Anspruch 5, **dadurch gekennzeichnet, dass** die Abkühlung des warmgewalzten Stahlflachprodukts mit einer Abkühlgeschwindigkeit von 30 - 300 K/s erfolgt.

7. Verfahren nach einem der Ansprüche 4 bis 6, **dadurch gekennzeichnet, dass** die Haspeltemperatur (HT) 530 - 600 °C beträgt.

8. Verfahren nach einem der Ansprüche 4 - 7, **dadurch gekennzeichnet, dass** das warmgewalzte Stahlflachprodukt zum Entzundern (Arbeitsschritt i)) gebeizt wird, indem es über eine Beizdauer Bt von 30 - 250 Sekunden durch ein mit einer Beizsäure gefülltes Beizbecken geleitet wird.

9. Verfahren nach Anspruch 8, **dadurch gekennzeichnet, dass** die Haspeltemperatur HT, die Glühtemperatur GT, die Glühdauer Gt und die Beizdauer Bt gemäß folgender Formel aufeinander abgestimmt werden:

$$(HT*GT*Gt)/Bt^2 \leq 50000$$

10. Verfahren nach einem der Ansprüche 4 - 9, **dadurch gekennzeichnet, dass** das Stahlflachprodukt mit einer Schmelztauchbeschichtung versehen wird (Arbeitsschritt m')) und anschließend einer Galvannealing-Behandlung unterzogen wird.

11. Verfahren nach Anspruch 10, **dadurch gekennzeichnet, dass** das schmelztauchbeschichtete Stahlflachprodukt für die Galvannealing-Behandlung auf eine Temperatur von 450 - 550 °C erwärmt wird.

12. Verfahren nach einem der Ansprüche 4 - 9, **dadurch gekennzeichnet, dass** das Stahlflachprodukt nach dem Abkühlen des geglühten Stahlflachprodukts auf eine Zwischentemperatur ZT von 400 - 550 °C(Arbeitsschritt l)) direkt auf Raumtemperatur abgekühlt (Arbeitsschritt m")) und anschließend elektrolytisch mit einer Korrosionsschutzbeschichtung beschichtet wird.

13. Verfahren nach einem der Ansprüche 4 - 12, **dadurch gekennzeichnet, dass** das Stahlflachprodukt abschließend dressiergewalzt wird.

**14.** Verfahren nach Anspruch 13, **dadurch gekennzeichnet, dass** der über das Dressierwalzen erzielte Kaltverformungsgrad höchstens gleich 1,5 % ist.

**Claims**

**1.** Cold rolled steel flat product having a yield strength Rp0.2 of at least 320 MPa, an elongation at break A80 of at least 20% and a microstructure comprising (in % by area) 62 - 82% ferrite, 10 - 30% martensite, 1.5 - 8% residual austenite and in total a maximum 10% of other microstructural constituents, wherein the steel flat product consists of a steel alloy containing (in % by weight):

| | |
|---|---|
| C: | 0.06 - 0.1%, |
| Si: | 0.15 - 0.4%, |
| Mn: | 1.5 - 2%, |
| Cr: | 0.2 - 0.5%, |
| Al: | $\leq 0.1\%$, |

wherein the sum total of the contents of C, Si, Mn and Cr is at least 2.3% and at most 2.8% and the sum total of the contents of Si and Al is at most 0.4%,

| | |
|---|---|
| P: | $\leq 0.03\%$, |
| S: | $\leq 0.006\%$, |
| N: | $\leq 0.008\%$, |

further technically unavoidable impurities, including $\leq 0.0006\%$ B, $\leq 0.02\%$ V and also in each case $\leq 0.01\%$ Nb, Ti and also in each case $\leq 0.1\%$ Mo, Ni and Cu, the remainder being iron
and wherein based on the total area under consideration, in each case the sum total of the area proportions of martensite, residual austenite and the other microstructural constituents of its microstructure is at least 18% by area.

**2.** Steel flat product according to claim 1, **characterised in that** its Al content is 0.02 - 0.05% by weight.

**3.** Steel flat product according to any one of the preceding claims, **characterised in that** based on the total area under consideration, the sum total of the area proportions of martensite, residual austenite and the other microstructural constituents of its microstructure is at most 38% by area.

**4.** Method for the production of a steel flat product formed according to any one of claims 1 to 3, comprising the following steps:

a) melting a steel melt consisting (in % by weight) of 0.06 - 0.1% C, 0.15 - 0.4% Si, 1.5 - 2% Mn, 0.2 - 0.5% Cr, up to 0.1% Al, wherein the sum total of the contents of C, Si, Mn and Cr is at least 2.3% and at most 2.8% and the sum total of the contents of Si and Al is at most 0.4%, up to 0.03% P, up to 0.006% S, up to 0.008% N and further technically unavoidable impurities, including $\leq 0.0006\%$ B, $\leq 0.02\%$ V, and $\leq 0.01\%$ each of Nb, Ti and $\leq 0.1\%$ each of Mo, Ni and Cu, the remainder being iron;
b) casting the steel melt to form a precursor which is a slab or thin slab;
c) through heating the precursor to a temperature of 1100 - 1300°C;
d) optionally descaling and rough-rolling the through-heated precursor;
e) hot finish-rolling the precursor to form a hot rolled steel flat product, wherein the temperature (AT) of the precursor at the start of the hot finish-rolling operation is 1050 - 1150°C and the temperature (ET) of the hot-finish-rolled steel flat product at the end of the hot finish-rolling operation is 800 - 950°C;
f) cooling the hot-finish-rolled steel flat product which has optionally been held for the wait period beforehand to a coiling temperature (HT) of 500 - 650°C;
g) coiling the hot rolled steel flat product which has been cooled to the coiling temperature (HT);
h) cooling the hot rolled steel flat product in the coil to room temperature;
i) descaling the cooled hot rolled steel flat product;
j) cold-rolling the hot rolled steel flat product to a cold rolled steel flat product, wherein the cold rolling level achieved by means of the cold rolling is 40 - 85% and the thickness of the cold finish-rolled steel flat product is 0.6 - 2.9 mm;

k) annealing the cold rolled steel flat product in a continuous run, by first bringing the steel flat product in one or more steps to an annealing temperature (GT) of 760 - 860°C and then keeping it within this annealing temperature range over an annealing period (Gt) which is within an annealing time range having a lower limit Gtu and upper limit Gto which are determined as a function of the respective thickness d of the cold rolled steel flat product as follows:

$$Gtu \ [s] \ = \ 3.56*D^2 \ [s/mm^2] \ - \ 5.1*D \ [s/mm] \ + \ 9.8 \ s$$

$$Gto \ [s] \ = \ -21.4*D^2 \ [s/mm^2] \ + \ 132.8*D \ [s/mm] \ + \ 47 \ s$$

l) cooling the annealed steel flat product in one or more steps to an intermediate temperature ZT of 400 - 550°C, wherein the cooling is effected at least within the temperature range of 550 - 650°C at a cooling rate of 2 - 100 K/s;

m') melt dip-coating the steel flat product which has been cooled to the intermediate temperature ZT

or

m") directly cooling the steel flat product from the intermediate temperature to room temperature at a cooling rate RK of 0.1 - 50 K/s.

5. Method according to claim 4, **characterised in that** the hot-finish-rolled steel flat product is kept under air for a wait period of 1 - 15 seconds between the hot rolling (step e)) and the cooling (step f)).

6. Method according to claim 5, **characterised in that** the hot rolled steel flat product is cooled at a cooling rate of 30 - 300 K/s.

7. Method according to any one of claims 4 to 6, **characterised in that** the coiling temperature (HT) is 530 - 600°C.

8. Method according to any one of claims 4 to 7, **characterised in that** the hot rolled steel flat product is pickled for descaling (step i)) by passing it through a pickling tank filled with a pickling acid over a pickling time Bt of 30 - 250 seconds.

9. Method according to claim 8, **characterised in that** the coiling temperature HT, the annealing temperature GT, the annealing time Gt and the pickling time Bt are synchronised with one another according to the following formula:

$$(HT*GT*Gt) \ /Bt^2 \ \leq \ 50000$$

10. Method according to any one of claims 4 to 9, **characterised in that** the steel flat product is provided with a melt dip-coating (step m')) and then subjected to a galvannealing treatment.

11. Method according to claim 10, **characterised in that** the melt dip-coated steel flat product is heated to a temperature of 450 - 550°C for the galvannealing treatment.

12. Method according to any one of claims 4 to 9, **characterised in that** the steel flat product, after the cooling of the annealed steel flat product to an intermediate temperature ZT of 400 - 550°C (step 1)), is cooled down directly to room temperature (step m")) and then coated electrolytically with an anti-corrosion coating.

13. Method according to anyone of claims 4 to 12, **characterised in that** the steel flat product is finally skin-pass rolled.

14. Method according to claim 13, **characterised in that** the degree of cold deformation achieved via the skin-pass rolling is not more than 1.5%.

**Revendications**

1. Produit plat en acier laminé à froid qui possède une limite élastique Rp0,2 d'au moins 320 MPa, un allongement à la rupture A80 d'au moins 20 % et une structure comprenant (en % en superficie) 62 à 82 % de ferrite, 10 à 30 % de martensite, 1,5 à 8 % d'austénite résiduelle et au total au maximum de 10 % d'autres constituants structurels, où le produit plat en acier est constitué d'un acier allié qui contient (en % en poids) les éléments suivants :

|  |  |
|---|---|
| C : | 0,06 - 0,1 %, |
| Si : | 0,15 - 0,4 %, |
| Mn : | 1,5 - 2%, |
| Cr : | 0,2 - 0,5 %, |
| Al : | < 0,1 %, |

où la somme des teneurs en C, Si, Mn et Cr est au moins égale à 2,3 % et tout au plus égale à 2,8 % et la somme des teneurs en Si et Al est tout au plus égale à 0,4 %,

|  |  |
|---|---|
| P : | ≤ 0,03 %, |
| S : | ≤ 0,006 %, |
| N : | ≤ 0,008 %, |

d'autres impuretés techniquement inévitables dont ≤ 0,0006% de B, ≤ 0,02% de V, ainsi que ≤ 0,01% de chacun des éléments Nb et Ti, ainsi que ≤ 0,1% de chacun des éléments Mo, Ni et Cu,
le reste étant du fer
et où, par rapport à la surface totale respectivement concernée, la somme des parts de surface en martensite, austénite résiduelle et autres constituants structurels de sa structure se monte à au moins 18 % en surface.

2. Produit plat en acier selon la revendication 1, **caractérisé en ce que** sa teneur en Al est de 0,02 - 0,05 en % en poids.

3. Produit plat en acier selon l'une quelconque des revendications précédentes, **caractérisé en ce que**, par rapport à la surface totale respectivement concernée, la somme des parts de surface en martensite, austénite résiduelle et autres constituants structurels de sa structure se monte tout au plus à 38 % en surface.

4. Procédé de production d'un produit plat en acier conçu selon une des revendications de 1 à 3, comportant les étapes de travail suivantes :

a) fusion d'une masse fondue d'acier qui se compose (en % en poids) de 0,06 - 0,1 % C, 0,15 - 0,4 % Si, 1,5 - 2 % Mn, 0,2 - 0,5 % Cr, jusqu'à 0,1 % Al, où la somme des teneurs en C, Si, Mn et Cr est au moins égale à 2,3 % et tout au plus égale à 2,8 % et la somme des teneurs en Si et Al est tout au plus égale à 0,4 %, jusqu'à 0,03 % P, jusqu'à 0,006 % S, jusqu'à 0,008 % N ainsi que d'autres impuretés techniquement inévitables, dont < 0,0006 % B, < 0,02 % V, ainsi que < 0,01 % de chacun des éléments Nb, Ti ainsi que < 0,1 % de chacun des éléments Mo, Ni et Cu, et le reste étant du fer ;
b) coulée d'une masse fondue d'acier en un produit intermédiaire, lequel consiste en une brame ou brame mince ;
c) réchauffement du produit intermédiaire à une température de 1100 - 1300 °C;
d) décalaminage facultatif et laminage préliminaire du produit intermédiaire réchauffé ;
e) laminage à chaud terminal du produit intermédiaire en un produit plat en acier laminé à chaud, où la température (AT) du produit intermédiaire au début du laminage à chaud terminal est de 1050 - 1150 °C et la température (ET) du produit plat en acier laminé à chaud achevé à la fin du laminage à chaud terminal est de 800 - 950 °C ;
f) refroidissement du produit plat en acier laminé à chaud achevé et, au choix, maintenu préalablement pendant le temps de pause, à une température de bobinage (HT) de 500 - 650 °C ;
g) bobinage du produit plat en acier laminé à chaud refroidi à une température de bobinage (HT) ;
h) refroidissement du produit plat en acier laminé à chaud en boucle à une température ambiante ;
i) décalaminage du produit plat en acier laminé à chaud refroidi ;
j) laminage à froid du produit plat en acier laminé à chaud en un produit plat en acier laminé à froid, où le degré de laminage à froid obtenu par le laminage à froid est de 40 - 85 % et l'épaisseur du produit plat en acier laminé à froid achevé est de 0,6 - 2,9 mm ;
k) recuit du produit plat en acier laminé à froid ayant lieu en continu, où le produit plat en acier est amené dans un premier temps, dans une ou plusieurs étapes, à une température de recuit (GT) de 760 - 860 °C et est ensuite maintenu dans cette plage de température de recuit pendant une durée de recuit (Gt) qui se situe dans une page de durée de recuit, dont la limite inférieure Gtu et la limite supérieure Gto sont déterminées en fonction de l'épaisseur respective d du produit plat en acier laminé à froid de la manière suivante :

$$\text{Gtu } [s] = 3,56*D^2[s/mm^2] - 5,1*D[s/mm] + 9,8 \text{ s}$$

$$\text{Gto } [s] = -21,4*D^2[s/mm^2] + 132,8*D[s/mm] + 47 \text{ s}$$

l) refroidissement du produit plat en acier recuit en une ou plusieurs étapes à une température intermédiaire ZT de 400 - 550 °C, où le refroidissement a lieu au moins dans une plage de température de 550 - 650 °C avec un taux de refroidissement de 2 - 100 K/s ;

m') revêtement au trempé à chaud du produit plat en acier refroidi à la température intermédiaire ZT

ou

m") refroidissement direct du produit plat en acier à partir de la température intermédiaire au niveau d'une température ambiante avec une vitesse de refroidissement RK de 0,1 - 50 K/s.

5. Procédé selon la revendication 4, **caractérisé en ce que** le produit plat en acier laminé à chaud achevé est maintenu à l'air entre le laminage à chaud (étape de travail e)) et le refroidissement (étape de travail f)) pendant un temps de pause de 1 - 15 secondes.

6. Procédé selon la revendication 5, **caractérisé en ce que** le refroidissement du produit plat en acier laminé à chaud a lieu avec une vitesse de refroidissement de 30 - 300 K/s.

7. Procédé selon une des revendications de 4 à 6, **caractérisé en ce que** la température de bobinage (HT) est de 530 - 600 °C.

8. Procédé selon une des revendications de 4 à 7, **caractérisé en ce que** le produit plat en acier laminé à chaud est décapé pour le décalaminage (étape de travail i)), en le dirigeant dans un bassin de décapage rempli d'acides de décapage pendant une durée de décapage Bt de 30 - 250 secondes.

9. Procédé selon la revendication 8, **caractérisé en ce que** la température de bobinage HT, la température de recuit GT, la durée de recuit Gt et la durée de décapage Bt sont adaptées les unes aux autres selon la formule suivante :

$$(HT*GT*Gt)/Bt^2 < 50000$$

10. Procédé selon une des revendications de 4 à 9, **caractérisé en ce que** le produit plat en acier est pourvu d'un revêtement au trempé à chaud (étape de travail m')) et est ensuite soumis à un traitement de galvanisation.

11. Procédé selon la revendication 10, **caractérisé en ce que** le produit plat en acier revêtu au trempé à chaud est réchauffé pour le traitement de galvanisation à une température de 450 - 550 °C.

12. Procédé selon une des revendications de 4 à 9, **caractérisé en ce que** le produit plat en acier, après le refroidissement du produit plat en acier recuit, est refroidi directement à partir d'une température intermédiaire ZT de 400 - 550 °C (étape de travail 1)) au niveau d'une température ambiante (étape de travail m")) et est par la suite revêtu par électrolyse avec un revêtement anticorrosif.

13. Procédé selon une des revendications de 4 à 12, **caractérisé en ce que** le produit plat en acier est soumis à un dressage par laminage.

14. Procédé selon la revendication 13, **caractérisé en ce que** le taux de déformation à froid obtenu pendant le dressage par laminage est tout au plus égal à 1,5 %.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2392683 B1
- US 2003106620 A1
- US 2010043513 A1